Europäisches Patentamt

European Patent Office

Office européen des brevets

(19)

(11) Veröffentlichungsnummer: **0 476 357 A1**

(12) # EUROPÄISCHE PATENTANMELDUNG

(21) Anmeldenummer: **91114218.0**

(22) Anmeldetag: **24.08.91**

(51) Int. Cl.5: **H02K 49/10**, F16H 13/12

(30) Priorität: **14.09.90 DE 4029182**

(43) Veröffentlichungstag der Anmeldung:
**25.03.92 Patentblatt 92/13**

(84) Benannte Vertragsstaaten:
**AT BE CH DE DK FR GB IT LI NL**

(71) Anmelder: **KSB Aktiengesellschaft
Johann-Klein-Strasse 9
W-6710 Frankenthal(DE)**

(72) Erfinder: **Starke, Jörg, Dr.
Alzeyer Strasse 4
W-6509 Eppelsheim(DE)**

(54) **Magnetkupplung.**

(57) Die Erfindung betrifft eine Magnetkupplung, bei der durch ein Spaltblech voneinander getrennte, Permanentmagnete aufweisende Kupplungshälften mit auf dem Spaltblech abrollbaren Permanentmagneten versehen sind.

Fig. 1

EP 0 476 357 A1

Die Erfindung betrifft eine Magnetkupplung gemäß dem Oberbegriff des Hauptanspruches.

Derartige Magnetkupplungen sind durch den Artikel "Recoma-Standardkupplungen", von D. Weinmann, in Technische Rundschau, Bern, Nr. 48, 1980, Seite 27, bekannt. Sie zeichnen sich durch ein zwischen den Kupplungshälften angeordnetes, hermetisch dichtes Spaltblech aus, gegenüber dem die Magnete der Antriebs- und Abtriebsseite Relativbewegungen ausführen. Je nach Art der Kupplung, z. B. Stirndrehkupplung oder Zentraldrehkupplung, handelt es sich bei dem Spaltblech um ein scheibenförmiges oder topf- bzw. rohrförmiges, aus nichtmagnetisierbarem Werkstoff bestehendes Bauteil. Infolge der Relativbewegungen zwischen Spaltblech und den Magneten ist für eine sichere Funktion dieser Kupplungsbauart eine stabile Lagerung der rotierenden Teile eine der Hauptvoraussetzungen. Denn eine Berührung zwischen rotierendem Teil und stillstehendem Spaltblech könnte dessen Zerstörung zur Folge haben. Da diese Bauart häufig bei der Förderung gefährlicher Medien Anwendung findet, die gewöhnlich in einem hermetisch dichten Kreislauf zirkulieren, muß eine Zerstörung des Spaltrohres und eine daraus resultierende Umweltbelastung unter allen Umständen vermieden werden.

Da der eine Teil der Magnetkupplung, üblicherweise der anzutreibende Teil auf der mit dem gefährlichen Medium beaufschlagten Seite angeordnet ist, befinden sich dessen Lagerteile innerhalb des Mediums und sind durch Verschmutzung in ihrer Funktion gefährdet. Des weiteren besteht die Gefahr, daß innerhalb des Mediums befindliche harte Fremdkörper im mediumseitigen Spalt zwischen angetriebenem Teil der Magnetkupplung und Spaltblech Beschädigungen desselben verursachen kann. Durch die funktionsnotwendigen zwei Spalte zwischen antreibendem Magnetkupplungsteil und Spaltblech sowie zwischen Spaltblech und angetriebenem Magnetkupplungsteil wird der Abstand der Magnete zueinander vergrößert. Als Folge hiervon tritt eine Herabsetzung der übertragbaren Kräfte ein. Im Hinblick auf die Vorteile der hermetischen Abdichtung werden diese Nachteile jedoch billigend in Kauf genommen.

Der Erfindung liegt die Aufgabe zugrunde, den konstruktiv bedingten Spalt zwischen den Magneten und dem Spaltblech zu minimieren. Die Lösung dieser Aufgabe erfolgt gemäß dem kennzeichnenden Teil des Hauptanspruches. Dieses Magnetkupplungssystem besteht aus jeweils einander gegenüberliegenden sich anziehenden und direkt am Spaltblech anliegenden Magneten. Die Magnete rollen direkt auf dem Spaltblech ab und entsprechend eines zu übertragenden Drehmomentes werden mehrere Magnetpaare nebeneinander bzw. über den Umfang verteilt angeordnet. Die Magnete sind in den Kupplungshälften drehbar gelagert und weisen einen abrollfähigen Querschnitt auf. Mit Hilfe bekannter Optimierungsvorgänge lassen sich die erforderliche Anzahl und Abmessungen der Magnete ermitteln.

Eine Ausgestaltung der Erfindung sieht vor, daß die Magnete mit auf dem Spaltblech abrollbaren Polschuhen versehen sind. Die Magnete sind im Bereich ihrer Pole mit die magnetischen Kräfte erhöhenden Polschuhen versehen. Die Polschuhe der einzelnen Magnetpaare rollen dann jeweils direkt am Spaltblech ab.

Eine weitere Ausgestaltung der Erfindung sieht vor, daß die Magnete in ihren antreibenden und/oder getriebenen Kupplungsteilen eine Lagerung mit großem Lagerspiel aufweisen.

Dadurch besteht die Möglichkeit, Fertigungstoleranzen auszugleichen und die Belastung des Spaltbleches durch die darauf abrollenden Magnete zu verringern. Innerhalb der Lagerung zwischen dem Magnet und den ihn haltenden Kupplungsteil, wobei es sich hierbei um das treibende oder getriebene Teil handeln kann, ist ohne weiteres durch entsprechend große Passungen eine nachgiebige Lagerung möglich. Diese bietet die Möglichkeit zum Ausgleich etwaiger Unebenheiten oder Unrundheiten des Spaltbleches. Nach weiteren Ausgestaltungen der Erfindung sind die Magnete als Permanentmagnete ausgebildet, wie dies auch bei den bekannten bisherigen Magnetkupplungen der Fall ist, und auf einem ebenen Spaltblech abrollende Magnete sind kegelförmig ausgebildet.

Ein Ausführungsbeispiel der Erfindung wird in den Zeichnungen dargestellt und im folgenden näher beschrieben. Die

Fig. 1    zeigt einen Querschnitt durch eine Magnetkupplung mit Spaltrohrtopf, die

Fig. 2    eine Draufsicht gemäß der Schnittlinie II-II und die

Fig. 3    eine Magnetkupplung in Stirndrehbauart.

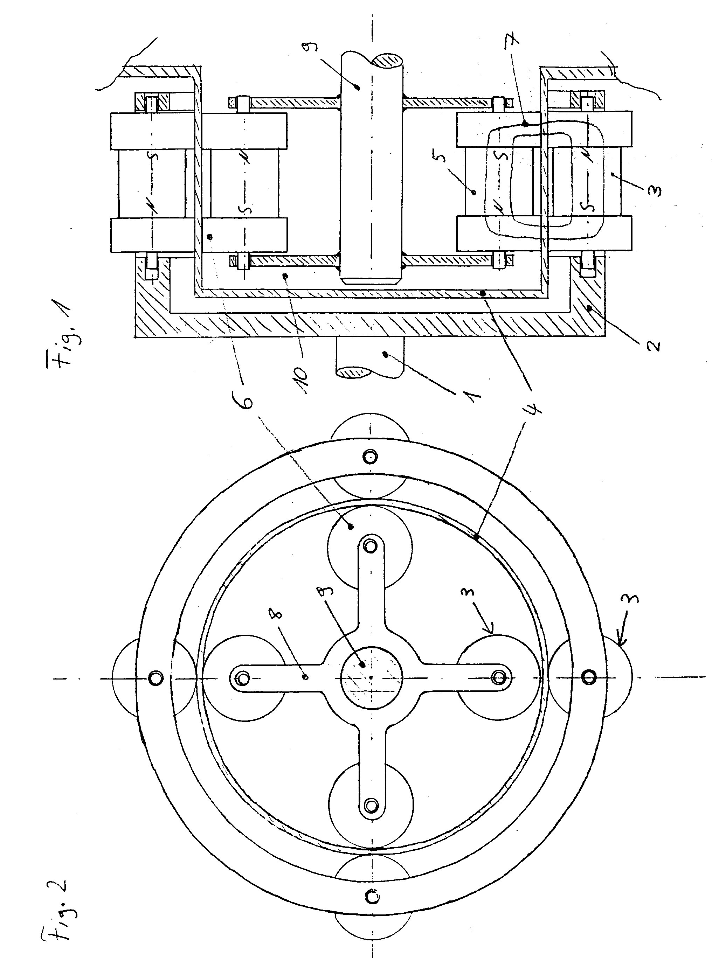

Die in Fig. 1 beispielhaft gezeigte Magnetkupplung gehört zur Bauart der Zentraldrehkupplungen und besteht aus einer antreibenden Welle (1), an deren Ende ein Korb (2) befestigt ist, an dem mehrere abrollfähige Magnete (3) angeordnet sind. Diese Magnete sind innerhalb des Korbes (2) mit Spiel gelagert, so daß sie zuverlässig am Spaltblech (4), welches hier als Spaltrohrtopf ausgebildet ist, anliegen und somit dessen eventuellen Abweichungen von einer idealen Kreisform folgen können. Mit jedem Magnet (3) wirkt ein ihm gegenüberliegender, auf der anderen Seite des Spaltbleches (4) anliegender Magnet (5) zusammen, hier an der Innenseite des Spaltrohrtopfes. Die Pole der Magnete sind mit N und S gekennzeichnet und so angeordnet, daß sie einander anziehen. Zur Verstärkung der Magnetkräfte sind die Magnetenden mit Polschuhen (6) ausgerüstet, welche direkt am Spaltblech (4) anliegen. Die Magnetlinien (7) verlaufen von der Nordseite eines Magneten (3) durch den Polschuh (6) in das Spaltblech (4), auf den gegenüberliegenden Polschuh (6) der Südseite des anderen Magneten (5), von dort über den Polschuh der Nordseite wiederum in das Spaltblech (4) und in den südseitigen Polschuh des äußeren Magneten (3) zurück. Auch die innerhalb des als Spaltrohrtopf ausgebildeten Spaltbleches (4) abrollenden Magneten (5) sind in dem angetriebenen Teil (8) der Kupplung radial nachgiebig gelagert, um somit jederzeit eine sichere Anlage am Spaltblech (4) zu gewährleisten. Gewöhnlich ist der hier innere Teil (8) der Kupplung, dessen Welle (9) Bestandteil einer Pumpe sein kann, mit Fördermedium gefüllt.

Gegenüber den bekannten Ausführungen weist diese Lösung den Vorteil auf, daß eventuell im Medium befindliche Fremdkörper entweder durch die Strömungsbewegung innerhalb des Raumes (10) beiseite geschwemmt werden und damit keine Beschädigung des Spaltbleches (4) bewirken oder daß die nachgiebig angeordneten Magnete (3, 5) bzw. deren Polschuhe (6) einen Fremdkörper einfach überrollen und entweder zur Seite drücken oder zerquetschen. Mit Hilfe einer entsprechenden Materialwahl bzw. einer entsprechenden Materialbehandlung wird sichergestellt, daß durch die auf dem Spaltblech (4) abrollenden Magnete (3) und/oder Polschuhe (6) keine Formänderung des Spaltbleches einhergeht.

Die Fig. 2 zeigt eine Draufsicht, aus der erkenntlich ist, daß bei dem hier gezeigten Beispiel insgesamt vier Magnetpaare Anwendung finden, welche die Drehbewegung der treibenden Welle (1) auf die anzutreibende Welle (9) bewirken. Eventuellen Unrundheiten des Spalttopfes kann infolge des vergrößerten Lagerspieles der drehbaren Magnete (3, 5) ohne weiteres gefolgt werden. Die anzutreibende Welle (9) kann in einfacher Weise und mit herkömmlichen Mitteln in einer hier nicht dargestellten Trennwand stabil gelagert werden.

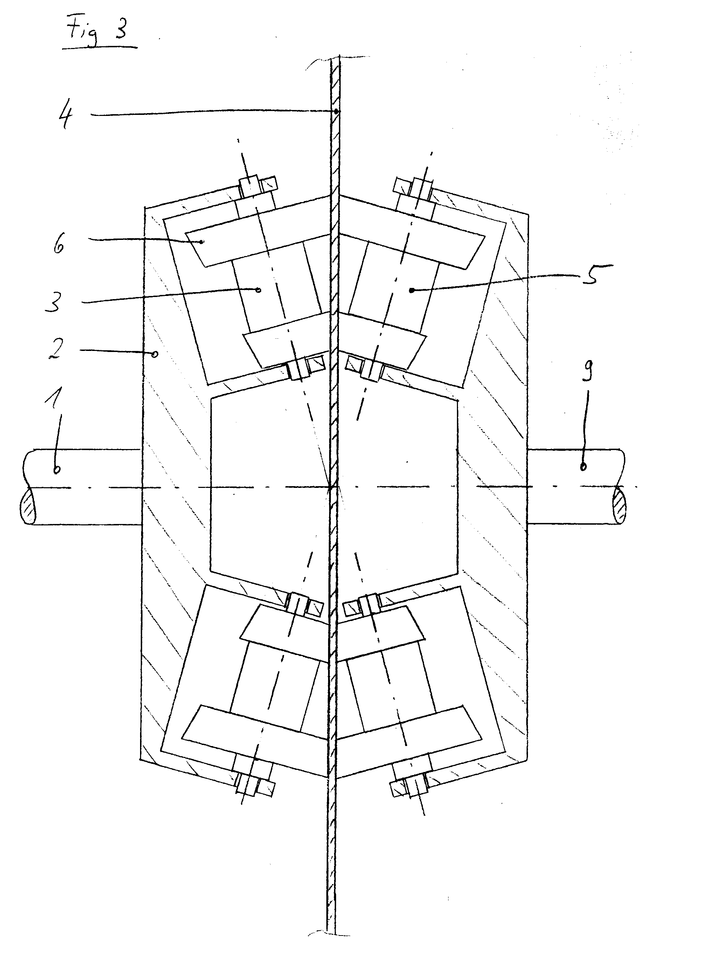

Die Fig. 3 zeigt ein Ausführungsbeispiel, bei dem eine Stirndrehkupplung Anwendung findet. Die hier auf dem Spaltblech (4) abrollenden Magnete (3, 5) sind mit Polschuhen (6) in kegelförmiger Form versehen, welche so bemessen sind, daß eine gleichmäßige Abrollbewegung ohne Relativbewegung zwischen den Magneten und dem Spaltblech möglich ist. Das Bestreben der Magnete, infolge der Zentrifugalkräfte nach außen zu wandern, kann mit Hilfe einer entsprechenden Lagerung im treibenden und/oder getriebenen Teil bzw. mit Hilfe eines Anlaufbundes unterbunden werden.

**Patentansprüche**

1. Magnetkupplung zur Übertragung von Drehbewegungen, wobei zwischen einem antreibenden und einem getriebenen Kupplungsteil, welche durch Magnetkräfte miteinander verbunden sind, eine hermetische Trennung durch ein Spaltblech erfolgt, **dadurch gekennzeichnet**, daß mehrere, jeweils um eine Achse drehbare Magnete (3, 5) paarweise zu beiden Seiten eines Spaltbleches (4) anliegen, daß die Magnete (3, 5) im dem antreibenden und getriebenen Kupplungsteil gelagert sind und daß die Magnete (3, 5) auf dem Spaltblech (4) abwälzen.

2. Magnetkupplung nach Anspruch 1, dadurch gekennzeichnet, daß die Magnete (3, 5) mit auf dem Spaltblech (4) abrollbaren Polschuhen (6) versehen sind.

3. Magnetkupplung nach den Ansprüchen 1 und 2, dadurch gekennzeichnet, daß die Magnete (3, 5) in ihren antreibenden und/oder getriebenen Kupplungsteilen eine Lagerung mit großem Lagerspiel aufweisen.

4. Magnetkupplung nach den Ansprüchen 1 bis 3, dadurch gekennzeichnet, daß die Magnete (3, 5) als Permanentmagnete ausgebildet sind.

5. Magnetkupplung nach den Ansprüchen 1 bis 4, dadurch gekennzeichnet, daß auf einem ebenen Spaltblech (4) abrollende Magnete (3, 5) kegelförmig ausgebildet sind.

Fig. 2

Fig. 1

8

9

3

3

6

10

9

1

5

4

7

2

3

N S

S N

N S

S N

EP 0 476 357 A1

4

Fig 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | SOVIET INVENTIONS ILLUSTRATED Section EI, Week 8946, 3. Januar 1990 Derwent Publications Ltd., London, GB; Class X, AN 89-338397 & SU-A-1 480 027 (N-W CORRESPONDENCE POLY) 15. Mai 1989 * Zusammenfassung * * <br> – – – | 1,4 | H 02 K 49/10 <br> F 16 H 13/12 |
| A | EP-A-0 039 777  (THYSSEN-EDELSTAHLWERKE AG) * das ganze Dokument * * <br> – – – | 1,4 | |
| A | DE-A-3 922 426  (GEBRÜDER SULZER AG) <br> – – – – – | 1,4 | |
| | | | **RECHERCHIERTE SACHGEBIETE (Int. Cl.5)** <br><br> H 02 K <br> F 16 H |

Der vorliegende Recherchenbericht wurde für alle Patentansprüche erstellt

| Recherchenort | Abschlußdatum der Recherche | Prüfer |
|---|---|---|
| Berlin | 21 Januar 92 | LEOUFFRE M. |